# EUROPÄISCHE PATENTSCHRIFT

(11) **EP 2 769 234 B1**
(45) Veröffentlichungstag und Bekanntmachung des Hinweises auf die Patenterteilung: **19.06.2019**
(21) Anmeldenummer: 12759387.9
(22) Anmeldetag: 28.08.2012
(51) Int. Cl.: G01S 17/93, B60Q 1/08, G06K 9/00, G06T 7/73, G01S 11/12

(54) **VERFAHREN UND VORRICHTUNG ZUR ERMITTLUNG EINER POSITION EINES OBJEKTES IN EINEM UMFELD EINES FAHRZEUGS**
METHOD AND APPARATUS FOR ASCERTAINING A POSITION FOR AN OBJECT IN SURROUNDINGS OF A VEHICLE
PROCÉDÉ ET DISPOSITIF VISANT À DÉTERMINER UNE POSITION D'UN OBJET SITUÉ DANS L'ENVIRONNEMENT D'UN VÉHICULE

(30) Priorität: 19.10.2011 DE 102011084762
(43) Veröffentlichungstag der Anmeldung: 27.08.2014
(73) Patentinhaber: Robert Bosch GmbH, 70442 Stuttgart (DE)
(72) Erfinder: FOLTIN, Johannes, 71254 Ditzingen (DE)
(86) Internationale Anmeldenummer: PCT/EP2012/066634
(87) Internationale Veröffentlichungsnummer: WO 2013/056883

(56) Entgegenhaltungen:
- WO-A1-2011/036936
- DE-A1- 19 603 267
- DE-A1-102007 018 599

## Beschreibung

### Stand der Technik

Die vorliegende Erfindung bezieht sich auf ein Verfahren zur Ermittlung einer Position eines Objektes in einem Umfeld eines Fahrzeugs, auf eine entsprechende Vorrichtung sowie auf ein entsprechendes Computerprogrammprodukt.

Bei der Ansteuerung von Kraftfahrzeug-Scheinwerfern sollte man wissen, ob eine Straße durch eine bauliche Trennung von der Gegenfahrbahn getrennt ist oder nicht. Die spezielle Lichtverteilung "Autobahnlicht" wird momentan nur dann eingeschaltet, wenn eine gewisse Geschwindigkeitsschwelle überschritten wird. Der Gesetzgeber erlaubt auch ein Einschalten des Autobahnlichts, wenn eine bauliche Trennung erkannt wurde.

Für die Scheinwerfer-Ansteuerungs-Algorithmen ist es wichtig zu wissen, ob eine bauliche Trennung vorliegt oder nicht: bei einer baulichen Trennung können die Scheinwerfer anderer Fahrzeuge häufig nicht erkannt werden, wodurch in Fernlicht umgeschaltet wird und es so zu Blendung kommen kann.

Navigationsinformationen können zwar sinnvoll genutzt werden, um eine Autobahn (ggf. auch bauliche Trennung) zu erkennen, jedoch sind fest installierte Navigationssysteme in Autos des unteren Preissegments selten vorhanden. In Baustellen, in denen es eine bauliche Trennung durch Betonwände gibt, versagt ein Navigationssystem durch das Aktualitätsproblem des Kartenmaterials.

Es gibt Situationen, in denen eine Abstandsmessung sinnvoll ist. Dazu gehören neben einem Assistenten für die Querführung (z.B. in Baustellen, Parkhäusern, Garagen) auch Assistenten für die Längsführung (z.B. Einparken, Abbremsen mit (Video-)ACC bis in den Stillstand). Bei den oben genannten Längs- und Querführungsaufgaben können Navigationssysteme wegen fehlendem Kartenmaterial und/oder Genauigkeit der GPS-Signale nicht eingesetzt werden.

Einparkhilfen werden momentan durch Ultraschallsensoren realisiert. Die Einparksysteme kosten Geld - auch wenn sie nur einen Warn-Ton über die Musikanlage ausgeben. Es gibt zwar Nachrüstsysteme, aber diese sind mit Mehrkosten verbunden. Häufig werden Einparkhilfen nur nach hinten eingebaut, da der Fahrer nach vorne eine bessere Sicht hat als nach hinten.

In der DE 10 2007 034 196 A1 wird ein Verfahren für die Spurerfassung mit einem ein Sensorsystem zur Spurerkennung umfassenden Fahrerassistenzsystem eines Fahrzeugs offenbart, bei dem mit dem Sensorsystem für Spurerkennung in einem vor dem Fahrzeug liegenden Bereich eines Verkehrsraums Fahrspurmarkierungen repräsentierende Messpunkte erfasst werden. Auf Basis eines Referenzmodells wird eine ideale Anzahl von Messpunkten MP ermittelt. Aus einem Vergleich zwischen der Anzahl der tatsächlich erfassten Messpunkte und der idealen Anzahl von Messpunkten wird ein Plausibilitätsmaß der Vorausschauweite bestimmt.

Die WO 2011/036936 A1 offenbart ein Hinderniserkennungsgerät.

Die DE 19603267 A1 offenbart eine Vorrichtung zur Abstands- und/oder Positionsbestimmung. Die DE 10 2007 018 599 A1 offenbart eine Vorrichtung zum Erfassen einer vorderen Fahrzeugumgebung und eine Vorrichtung zum Beleuchten einer Fahrzeugvorderseite.

### Offenbarung der Erfindung

Vor diesem Hintergrund wird mit der vorliegenden Erfindung ein Verfahren, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Ermittlung einer Position eines Objektes in einem Umfeld eines Fahrzeugs, wobei das Verfahren die folgenden Schritte umfasst:
- Einlesen eines Lichtsignals von einem optischen Sensor, wobei das Lichtsignal
   ∘ eine Helligkeit und einen Grad einer Reflexion von Licht, das von einem Scheinwerfer des Fahrzeugs ausgestrahlt wurde von einem Objekt und/oder
   ∘ eine Helligkeit und eine Schärfe einer Begrenzungslinie des von Licht aus dem Scheinwerfer angestrahlten Objektes repräsentiert; und
- Bestimmen eines Abstandes des Objektes von dem Fahrzeug unter Verwendung des Lichtsignals, um die Position des Objektes in dem Umfeld des Fahrzeugs zu bestimmen.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Insbesondere schafft die vorliegende Erfindung eine Vorrichtung zur Ermittlung einer Position eines Objektes in einem Umfeld eines Fahrzeugs, wobei die Vorrichtung die folgenden Merkmale umfasst:
- eine Schnittstelle zum Einlesen eines Lichtsignals von einem optischen Sensor, wobei das Lichtsignal
   ∘ eine Helligkeit und einen Grad einer Reflexion von Licht, das von einem Scheinwerfer des Fahrzeugs ausgestrahlt wurde von einem Objekt und/oder
   ∘ eine Helligkeit und eine Schärfe einer Begrenzungslinie des von Licht aus dem Scheinwerfer angestrahlten Objektes repräsentiert; und
- eine Einheit zum Bestimmen eines Abstandes des Objektes von dem Fahrzeug unter Verwendung des Lichtsignals, um die Position des Objektes in dem Umfeld des Fahrzeugs zu bestimmen.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Unter einer Position eines Objektes in einem Umfeld eines Fahrzeugs kann eine (beispielsweise geographische) Lage des Objektes oder eines Teils des Objektes in Bezug zum Fahrzeug, insbesondere ein Abstand des Objektes und/oder des Teils des Objektes zum Fahrzeug und/oder eine Richtung des Objekts oder des Teils des Objektes zum Fahrzeug verstanden werden. Unter einem optischen Sensor kann eine Einheit zur Aufnahme von Bildern unter Auswertung zumindest eines Teils des für das menschliche Auge sichtbaren elektromagnetischen Bereichs bereits verstanden werden. Mittels des optischen Sensors können auch Bereiches des elektromagnetischen Spektrums erfasst werden, die für das menschliche Auge nicht sichtbar sind. Diese Spektralanteile können dann ebenfalls unter Verwendung der weiteren Komponenten der hier vorgestellten Vorrichtung oder unter Anwendung der Schritte des hier vorgestellten Verfahrens ausgewertet werden. Halbleiter sind im Allgemeinen sensitiver im Infrarot-Bereich (IR-Bereich). Durch Nutzung eines IR-Filters kann versucht werden, den Bereich zu entfernen, den gesamten nicht-visuellen Bereich kann man meist nicht entfernen und wertet diesen daher mit aus. Unter einer Schärfe einer Begrenzungslinie eines Bereichs eines mit Licht aus dem Scheinwerfer angestrahlten Objektes kann eine Breite und/oder eine Struktur eines Übergangs von einem helleren, mit dem Licht aus dem Scheinwerfer beleuchteten Bereich des Objektes und einem dunkleren, nicht vom Licht des Scheinwerfers des Fahrzeugs beleuchteten Bereichs verstanden werden.

Die vorliegende Erfindung basiert auf der Erkenntnis, dass durch die Ausnutzung der physikalischen Gesetze der Optik, insbesondere in Bezug auf eine Verringerung der Helligkeit oder des Kontrastes mit der Zunahme der Entfernung vom Objekt zum Fahrzeug eine Ermittlung dieser Entfernung auch ohne speziell hierfür ausgelegte Sensoren wie beispielsweise Radar- oder Ultraschallsensoren erfolgen kann. Vielmehr kann beispielsweise die oftmals bereits serienmäßig in Fahrzeugen verbaute Kamera dazu verwendet werden, den Abstand des Objektes oder eines Teils des Objektes zu bestimmen. Die vorliegende Erfindung bietet somit den Vorteil, dass ein bereits für andere Funktionen vorhandenes Sensorelement für eine zusätzliche Funktion eingesetzt werden kann, so dass beispielsweise ein separater Sensor, der speziell für die Implementierung dieser zusätzlichen Funktion vorgesehen ist, entfallen kann. Dies reduziert die Herstellungskosten eines Systems für die Bereitstellung der vorstehend genannten Funktionen.

Besonders vorteilhaft ist es, wenn im Schritt des Einlesens ferner ein Winkel eingelesen wird, unter dem das Lichtsignal in Bezug zu einer Ausrichtung des Fahrzeugs erfasst wurde, wobei im Schritt des Bestimmens die Position des Objektes ferner unter Verwendung des Winkels bestimmt wird. Eine derartige Ausführungsform der vorliegenden Erfindung bietet den Vorteil einer sehr genauen und präzisen Bestimmung der Position des Objektes oder des Teils des Objektes.

Um insbesondere eine gute räumliche Abschätzung der Lage des Objekts in Bezug zum Fahrzeug zu erhalten, kann der Abstand und/oder die Richtung von mehreren Teilbereichen des Objektes in Bezug zum Fahrzeug ermittelt werden. Gemäß einer günstigen Ausführungsform der vorliegenden Erfindung können daher im Schritt des Einlesens ein weiteres Lichtsignal von dem optischen Sensor eingelesen werden, das eine Helligkeit, einen Grad einer Reflexion von Licht repräsentiert, wobei das weitere Lichtsignal eine Helligkeit, einen Grad einer Reflexion von Licht, das von dem Scheinwerfer des Fahrzeugs ausgestrahlt wurde von dem Objekt oder eine Schärfe der Begrenzungslinie des von Licht aus dem Scheinwerfer des Fahrzeugs angestrahlten Objektes repräsentiert, wobei das Lichtsignal von einer anderen Stelle des Objektes erfasst wird, als das Lichtsignal und wobei im Schritt des Bestimmens eine räumliche Abbildung des Objektes unter Verwendung des Lichtsignals und des weiteren Lichtsignals bestimmt wird.

Für die Verbesserung der Fahrsicherheit bei der Fahrt eines Fahrzeug kann gemäß einer günstigen Ausführungsform der vorliegenden Erfindung ein Schritt des Erkennens einer baulichen Infrastrukturmaßnahme vorgesehen sein, wenn (insbesondere bei einer Fahrt des Fahrzeugs) der Abstand zu dem Objekt im Schritt des Bestimmens kleiner als ein vorbestimmter Sicherheitsabstand ist. Unter einer baulichen Infrastrukturmaßnahme kann beispielsweise eine Trennwand oder Leitplanke zwischen zwei Fahrspuren (insbesondere mit entgegen gerichteter Fahrtrichtung) auf einer mehrspurigen Straße wie beispielsweise einer Autobahn verstanden werden. Weiterhin kann unter einer baulichen Infrastrukturmaßnahme ein (unbeleuchteter) Begrenzungspfosten am Fahrbahnrand verstanden werden, der Licht des Scheinwerfers zurück reflektiert, ein erhabener Bordstein am Straßenrand sein oder eine Wand in der Nähe des Fahrzeugs, beispielsweise vor, hinter oder seitlich zum Fahrzeug, sein. Eine derartige Ausführungsform der vorliegenden Erfindung bietet den Vorteil, dass aus der Erkennung der Position des Objektes ein Rückschluss auf den Verlauf des Objektes in Bezug zur Fahrtrichtung möglich ist, so dass das Vorhandensein dieser baulichen Trennung für andere Funktionen des Fahrzeugs weiterverwendet werden kann. Ebenso kann der ermittelte Abstand zu einem Objekt von anderen Funktionen des Fahrzeugs weiterverwendet werden.

Das Erkennen der baulichen Infrastrukturmaßnahme kann dazu genutzt werden, um eine spezielle Lichtverteilung Autobahnlicht einzuschalten. Weiterhin ist es möglich Parameter für Fernlichtassistenten anzupassen.

Bei einem klassischen Fernlichtassistenten, der zwischen Abblendlicht und Fernlicht umschaltet, kann die Zeit zum Aufblenden auf Fernlicht bei Erkennen einer baulichen Trennung verändert, insbesondere verlängert werden. Dies hat den Vorteil, dass die Zeit für die Erkennung anderer Fahrzeuge, die durch die bauliche Trennung nur schwer erkannt werden können, verlängert wird, wodurch ein Aufblenden bei Vorhandensein eines nicht erkannten anderen Verkehrsteilnehmers vermieden wird. Neben der Vermeidung von Blendung weist das System ein ruhigeres Verhalten auf, was angenehmer für den Fahrer ist als ein hektisches Verhalten, das den Fahrer stören kann.

Beispielsweise kann das Erkennen einer baulichen Infrastrukturmaßnahme bei den Funktionen der Spurverlassenswarnung und Spurhalteassistenten genutzt werden. Wenn der seitliche Abstand zum jeweiligen Objekt zu gering wird, kann ein Warnsignal erzeugt werden, das beispielsweise optisch, akustisch oder haptisch ausgeprägt sein kann. Alternativ oder zusätzlich kann ein Eingriff in das Fahrzeug erfolgen, sodass eine Kollision vermieden wird, indem ein Mindestabstand eingehalten wird, oder zumindest die Stärke vermindert wird und/ oder der Kollisionswinkel flacher wird. Die Funktionen der Spurverlassenswarnung und Spurhalteassistenten basieren normalerweise auf Informationen der Spurmarkierungen. Wenn die Spurmarkierung fehlt oder auch als Ergänzung der Spurinformation aus der Spurmarkierung, kann die vorliegende Erfindung vorteilhaft genutzt werden, um den Fahrer vor einer Kollision mit einer baulichen Infrastrukturmaßnahme zu warnen oder zu schützen. So kann auch beispielsweise in Baustellen, in denen Fahrspuren teilweise durch bauliche Infrastrukturmaßnahmen getrennt sind, der Fahrer auch bei fehlender Spurmarkierung bei der Fahrzeugführung unterstützt werden.

Im städtischen Bereich ist der Rand der Fahrbahn häufig durch Bordsteine begrenzt, wobei teilweise auf Spurmarkierungen verzichtet wird. Durch Erkennen des Abstandes von Bordsteinen kann der Fahrer auch in dieser Situation durch Spurverlassenswarnung oder Spurhalteassistenten unterstützt werden, was bei ausschließlich spurbasierten Assistenten bei fehlender Spurmarkierung nicht mehr möglich wäre.

Wenn am Straßenrand Fahrzeuge parken und die Spurmarkierung verdecken oder keine Spurmarkierung vorhanden ist, kann der Fahrer mit der vorliegenden Erfindung dennoch unterstützt werden. Durch die Lichthelligkeit an den anderen Fahrzeugen kann der Abstand zu diesen ermittelt werden und so der befahrbare Bereich geschätzt werden, auf dem der Fahrer sein Fahrzeug bewegen kann. Durch Warnungen und Eingriffe der Funktionen Spurverlassenswarnung und Spurhalteassistenten kann der Fahrer mit der vorliegenden Erfindung auch in dieser Situation unterstützt werden.

In Parksituationen, in denen der Fahrer seitlich eingeschränkt ist, beispielsweise in einer Garage oder einem Parkplatz mit seitlicher Begrenzung durch Bebauung, Bewuchs oder andere Fahrzeuge, können die Lichtsignale ausgewertet werden, um den Abstand zu den Hindernissen zu ermitteln. So kann der Fahrer durch Warnungen und Eingriffe in das Fahrzeug in Abhängigkeit zum ermittelten Abstand beim Parkieren unterstützt werden oder das Fahrzeug parkt autonom ein.

In weiteren Funktionen kann der Abstand zu Objekten in Fahrtrichtung genutzt werden, um den Fahrer vor einer Kollision mit dem Objekt zu warnen oder in das Fahrzeug einzugreifen.

Insbesondere kann durch die vorliegende Erfindung der Fahrer beim Parkieren oder Rangieren unterstützt werden, sodass der Fahrer gewarnt wird, wenn der Abstand zu einem Objekt wie beispielsweise einer Wand oder einem anderen Fahrzeug kleiner als eine vorbestimmte Schwelle wird. Alternativ oder zusätzlich zu einer Warnung kann ein Eingriff in das Fahrzeug in Abhängigkeit vom ermittelten Abstand erfolgen. Die vorliegende Erfindung ermöglicht neben der Unterstützung des Fahrers auch ein autonomes Parkieren und Rangieren insbesondere im niederen Geschwindigkeitsbereich.

Das Ermitteln des Abstandes kann auch an anderen Fahrzeugen erfolgen. Neben dem Ermitteln des Abstandes an stehenden Fahrzeugen kann zusätzlich oder alternativ auch der Abstand und davon abgeleitet die Abstandsänderung zu anderen Fahrzeugen ermittelt werden. So ist es möglich einem anderen Fahrzeug in einem bestimmten Abstand zu folgen und auf dessen Geschwindigkeits-änderungen, die sich in einer Änderung des Abstandes und der Abstandsänderung niederschlagen, zu reagieren. Eine Reaktion kann beispielsweise das Erzeugen eines akustischen, optischen oder haptischen Warnsignals umfassen und zusätzlich oder alternativ dazu einen Eingriff in das Fahrzeug umfassen. Die Nutzung der vorliegenden Erfindung kann insbesondere im niederen Geschwindigkeitsbereich und bei geringem Abstand zur Sicherheit im Verkehr beitragen. Beispielsweise kann einem anderen Fahrzeug in einem Parkhaus gefolgt werden oder die Geschwindigkeit und der Abstand an einer Kreuzung, Ampel oder im Stau an ein vorausfahrendes Fahrzeug angepasst werden.

Unter einem Objekt kann beispielsweise eine bauliche Infrastrukturmaßnahme, eine Leitplanke, Trennwand, Betonwände (oder allgemein seitliche Begrenzungen), eine Wand, Bordstein, Leit- und Begrenzungspfosten, Busch- und Baumbewuchs, wie auch andere (vorzugsweise parkende) Fahrzeuge, verstanden werden.

Besonders vorteilhaft ist es, wenn im Schritt des Erkennens die bauliche Infrastrukturmaßnahme dann erkannt wird, wenn ein Bereich in Fahrtrichtung vor dem Fahrzeug eine größere Helligkeit aufweist, als es ohne das Vorhandensein der baulichen Infrastrukturmaßnahme zu erwarten wäre. Eine solche Ausführungsform der vorliegenden Erfindung bietet den Vorteil einer Ausnutzung der physikalischen Gesetzmäßigkeiten in Bezug auf eine Lichtausstrahlung und Reflexion zur besonders zuverlässigen Detektion der Position baulicher Infrastrukturmaßnahme.

Ferner kann ausgenutzt werden, dass bei einer Reflexion von Licht an einem Objekt dieses Licht nicht nur zum optischen Sensor zurück, sondern auch in eine unmittelbare Umgebung des Objektes, beispielsweise auf die dort befindliche Fahrbahn reflektiert wird, welche hierdurch eine höhere Helligkeit aufweist als ohne das Vorhandensein des Objektes zu erwarten gewesen wäre. Hierzu kann gemäß einer Ausführungsform der vorliegenden Erfindung im Schritt des Erkennens die bauliche Maßnahme auf derjenigen Seite des Fahrzeugs angeordnet erkannt werden, auf der ein Bereich mit einer größeren als einer zu erwartenden Helligkeit erkannt wurde.

Um beispielsweise eine Anpassung einer automatischen Lichtregulierung durchführen zu können, die das Licht den jeweiligen Straßenverhältnissen und damit auch in Abhängigkeit von einer erkannten baulichen Infrastrukturmaßnahme entsprechend anpasst, kann gemäß einer Ausführungsform der vorliegenden Erfindung ein Schritt des Anpassens einer Lichtausstrahlung von Licht des Scheinwerfers des Fahrzeugs, beispielsweise das Umschalten auf eine spezielle Lichtverteilung Autobahnlicht, und/oder eines Lichtausstrahlungsparameters zur Lichtausstrahlung von Licht des Scheinwerfers des Fahrzeugs, beispielsweise der Wartezeit zum Aufblenden von Abblendlicht auf Fernlicht, vorgesehen sein, wenn im Schritt des Erkennens die bauliche Infrastrukturmaßnahme erkannt wurde.

Gemäß einer besonders günstigen Ausführungsform der vorliegenden Erfindung kann vor dem Schritt des Einlesens ein Schritt des Ansteuerns einer Bewegung zumindest eines Scheinwerfers ausgeführt werden, wobei das Ansteuern derart ausgeführt, dass eine Lichtausstrahlung von Licht des Scheinwerfers des Fahrzeugs und/oder eines Lichtausstrahlungsparameters zur Lichtausstrahlung von Licht des Scheinwerfers des Fahrzeugs derart verändert wird, dass die Lichtausstrahlung in einer im Wesentlichen quer zur Fahrtrichtung des Fahrzeugs gerichteten Richtung geschwenkt wird. Auch kann vor und nach einem Schritt des Ansteuerns je ein Schritt des Einlesens durchgeführt werden, so dass sich durch die Auswertung des Lichtsignals vor und nach dem Ansteuern eine sehr präzise und einfache Analyse der Umgebung um das Fahrzeug herum möglich wird. Das Schwenken der Scheinwerfer oder allgemeiner der Lichtausstrahlung erfolgt, um genauer messen zu können. Das Verschwenken kann ähnlich einem Suchscheinwerfer zum Auffinden oder besser Vermessen des Objektes verstanden werden. Beispielsweise könnte in Intervallen ein Schwenken des Scheinwerfers erfolgen, ohne dass eine bauliche Trennung erkannt werden braucht, z.B. zusätzlich zum sonstigen Abschätzen des Vorhandenseins einer baulichen Trennung ohne Verschwenken. Das Verschwenken der Scheinwerfer kann bei der Erkennung einer baulichen Trennung zur Plausibilisierung genutzt werden. Das Schwenken kann vorzugsweise zur Erkennung von Objekten selbst genutzt werden, beispielsweise wenn die Wahrscheinlichkeit einer baulichen Trennung hoch ist. Die kann bedeuten, dass die Scheinwerfer vorzugsweise geschwenkt werden, noch bevor die bauliche Infrastrukturmaßnahme erkannt wurde. Die zuvor beschriebene Anpassung einer Lichtausstrahlung kann dagegen beispielsweise als Umschalten in die Lichtverteilung "Autobahnlicht" verstanden werden, wogegen das Verschwenken der Scheinwerfer jedoch zum Ermitteln des Vorhandenseins einer baulichen Trennung erfolgt. Die Scheinwerfer werden also verschwenkt, um genauere Messdaten für die Messung zu erhalten. Eine derartige Ausführungsform der vorliegenden Erfindung bietet den Vorteil einer präzisen und schnell ausführbaren Möglichkeit zur Erfassung von Objekten im Erfassungsbereich eines optischen Sensors.

Wenn beispielsweise ein Fahrer das Fahrzeug in einer Tiefgarage einparken möchte, kann auch durch die Fahrzeugscheinwerfer die Wand der Tiefgarage erkannt und als das Objekt gewertet werden. Um nun den hier vorgestellten Ansatz auch als Einparkhilfe verwenden zu können, kann gemäß einer Ausführungsform der vorliegenden Erfindung ein Schritt des Ausgebens eines Warnsignals vorgesehen sein, wenn der bestimmte Abstand kleiner als ein Warnabstand ist. Diese Warnsignal kann ein optisches, akustisches, haptisches oder anderes Signal sein, das dem Fahrer einen Hinweis auf den Abstand, einen geringer werdenden Abstand vom Fahrzeug zum Objekt oder einen zu geringen Abstand des Fahrzeugs zum Objekt gibt. Alternativ oder ergänzend kann ein (teil-) automatisches Einparken durch beispielsweise Abbremsen an einer Wand durchgeführt werden.

Der Eingriff erfolgt, wenn der Abstand kleiner als ein vorbestimmter Eingriffsabstand ist.

Besonders vorteilhaft ist folglich eine Ausführungsform der vorliegenden Erfindung, bei der ein Schritt des Eingreifens eines Fahrerassistenzsystems in eine Steuerung des Fahrzeugs ansprechend auf den bestimmten Abstand des Objektes von dem Fahrzeug vorgesehen ist, wobei insbesondere ein Eingreifen eines Spurhalteassistenten, ein Assistenzsystem zur Einhaltung eines Abstandes zu einem vorausfahrenden Fahrzeug, ein Assistenzsystem zur Überwachung einer seitlichen Annäherung an eine Begrenzung, ein oder ein Bremsassistenzsystem und/oder ein Einparkhilfesystem als Fahrerassistenzsystem ansprechend auf den bestimmten Abstand des Objektes zu dem Fahrzeug erfolgt. Auf diese Weise kann der bestimmte Abstand des Objektes zu dem Fahrzeug auch von weiteren Assistenzsystemen des Fahrzeugs verwendet werden, was einen hohen Zusatznutzen ermöglicht, der jedoch nur mit sehr geringen zusätzlichen Kosten erreichbar ist.

Befindet sich das Fahrzeug neben einem Objekt und ist der ermittelte Abstand geringer als ein vorbestimmter Eingriffsabstand, kann das Fahrzeug durch Eingriff ins das Fahrzeug beispielsweise über die Lenkung oder Bremse vor einem Kontakt mit der Infrastrukturmaßnahme geschützt werden bzw. die Schwere vermindert werden.

Die Erfindung wird nachstehend anhand der beigefügten Zeichnungen beispielhaft näher erläutert. Es zeigen:
- Fig. 1: ein Blockschaltbild eines Fahrzeugs, in dem ein Ausführungsbeispiel der der vorliegenden Erfindung eingesetzt wird;
- Fig. 2: ein Prinzipschaubild eines weiteren Ausführungsbeispiels zur Erkennung von einer baulichen Trennung durch unterschiedliche Helligkeiten im Bild eines erfassten Ausleuchtungsbereiches vor den eigenen Fahrzeug;
- Fig. 3: eine Darstellung von einem Scheinwerferpaar als Lichtobjekt, wobei die unterschiedliche Schärfe und Helligkeit bei einer Annäherung des Scheinwerferpaares an einen Betrachter verdeutlicht ist; und
- Fig. 4: ein Ablaufdiagramm eines Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

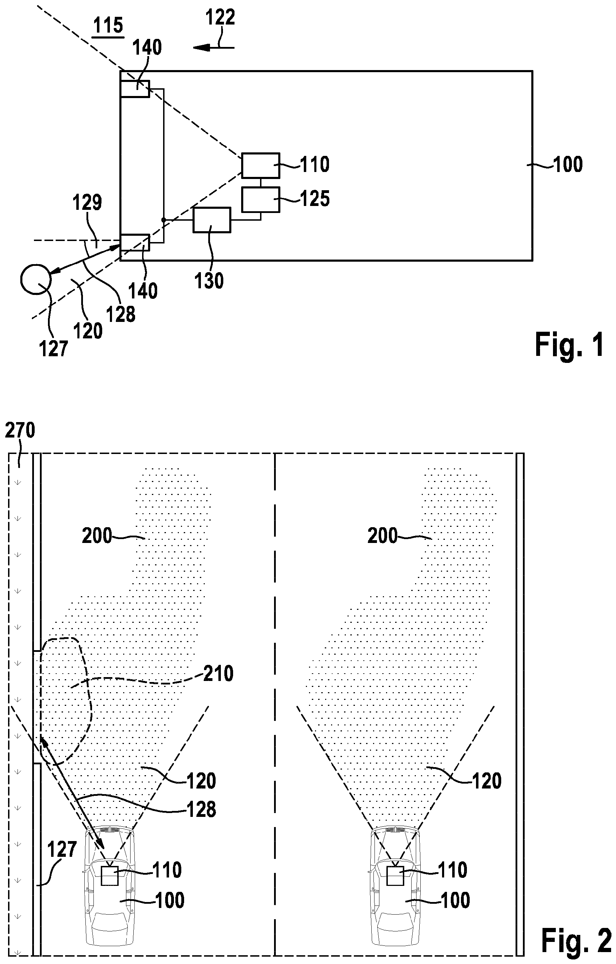

Fig. 1 zeigt ein Blockschaltbild eines Fahrzeugs 100, welches eine Kamera 110 aufweist, um eine Fahrzeugumgebung 115, insbesondere in einem Blickfeld 120 der Kamera 110 in Fahrtrichtung 122, zu überwachen. Die Kamera 110 generiert dabei ein Kamerabild, welches zu einer Auswerteeinheit 125 übertragen wird. In der Auswerteeinheit 125 werden Objekte 127 aus dem Kamerabild erkannt und extrahiert, wie es nachfolgend noch näher dargestellt ist. Ferner kann ein Abstand 128 (z.B. ein lateraler oder seitlicher) des Objektes 127 zum Fahrzeug 100 und/oder ein Winkel 129 des Objektes von einer Fahrzeuglängsachse ermittelt werden. In der Auswerteeinheit 125 kann dann auf das Objekt, das beispielsweise eine baulichen Trennung zwischen einer Fahrspur, auf der das eigene Fahrzeug 100 fährt, und eine Fahrspur, auf der Gegenverkehrs, geschlossen werden, wenn der ermittelte Abstand 128 kleiner als ein Schwellenwert ist. In diesem Fall kann ein Signal an eine Scheinwerfersteuerung 130 ausgegeben werden, die eine Regelung der Fahrzeugscheinwerfer 140 durchführt. Beispielsweise kann bei einer durch den vorstehend beschriebenen Ansatz erkannten vorhandenen baulichen Trennung zwischen den beiden Fahrspuren als Objekte 127 eine Zeitspanne für ein automatisches Umschalten von Abblendlicht auf Fernlicht oder allgemein zwischen verschiedenen Lichtausstrahlungscharakteristika verlängert werden. Hierdurch kann es beispielsweise vermieden werden, dass eine Reihe von Objekten 127, die beispielsweise Lamellen eines Blendungsschutzes darstellen, dazu führen, dass unmittelbar nach dem Passieren einer dieser Blendungslamellen wieder die Lichtausstrahlung durch Scheinwerfer des eigenen Fahrzeugs 100 verändert wird, so dass ein Fahrer eines entgegenkommenden Fahrzeugs möglicherweise geblendet wird. Würde weiterhin sofort von Abblendlicht auf Fernlicht umgeschaltet, wenn das Lichtobjekt nicht mehr detektiert wird, und würde das Lichtobjekt beispielsweise hinter einer weiteren Blendungslamelle als baulicher Trennung 127 wieder auftauchen, würde dies ferner zu einem sehr schnellen Anpassen der Lichtverteilung wie z.B. Hin- und Herschalten zwischen Abblendlicht und Fernlicht führen, was für den Fahrer des eigenen Fahrzeugs als sehr unangenehm und somit sehr störend empfunden würde.

Die Bestimmung des Abstandes des Objektes 127, von dem Fahrzeug wird nachfolgend am Beispiel einer Erkennung einer vorhandenen baulichen Trennung 127 bei Fahrbahnen durch die Auswertung der Helligkeit von am Objekt 127 reflektierten Scheinwerferlicht erläutert. Die Kamera 110, die im Fahrzeug 100 eingebaut ist, nimmt Bilder aus der Fahrtrichtung 122 auf. Das Kamera-Steuergerät oder die Auswerteeinheit 125 kennt die Lichtverteilung der Scheinwerfer, wie dies beispielsweise in der Fig. 2 dargestellt ist. Die Fig. 2 zeigt dabei an ein Prinzipschaubild zur Erkennung von baulicher Trennung durch unterschiedliche Helligkeit im Kamerabild, wobei in der linken Darstellung aus Fig. 2 einen Ausleuchtungsbereich 200 vor dem eigenen Fahrzeug 100 bei einem Vorhandensein einer baulichen Trennung 127 zwischen Fahrspuren unterschiedlicher Fahrtrichtung und die rechte Darstellung einen Ausleuchtungsbereich 200 bei keiner vorhandenen baulichen Trennung 127 wiedergibt. Als bauliche Trennung 127 kann dabei eine Erhebung von der Fahrbahn wie beispielsweise eine Leitplanke, eine Betonwand (auch in einer Baustelle) oder ähnliches betrachtet werden. Für Licht gilt ferner das quadratische Entfernungsgesetz, d.h. die Helligkeit nimmt quadratisch mit der Entfernung ab.

Die Kamera 110 schätzt den Reflexionsgrad (d.h. die "Farbe" und/oder die "Helligkeit") von einem oder mehreren interessanten Objekten 127 (z.B. einer Leitplanke) zum Fahrzeug 100 und kann über das von den Scheinwerfern 140 ausgesandte Licht zusammen mit dem Reflexionsgrad aus dem gemessenen Grauwert die Entfernung oder den Abstand 128 bestimmen. Dabei kann auch ein Winkel 129 ermittelt und zur Schätzung der genauen Position des Objektes 127 zum Fahrzeug 100 verwendet werden. Wenn das Objekt groß ist, kann auch eine räumliche Erfassung des Objektes 127 in Bezug zum Fahrzeug erfolgen. Dabei können beispielsweise mehrere unterschiedliche Positionen von Teilbereichen des Objektes 127 auf die vorstehende Weise bestimmt werden und aus diesen bestimmten Positionen dann auf die Ausdehnung und Lage des großen Objektes 127 zurückgeschlossen werden. Es kann somit versucht werden, eine "3D-Karte" der Helligkeitswerte vor dem Fahrzeug 100 zu erstellen und hierdurch die Ausdehnung und Lage des Objektes 127 vor oder neben dem Fahrzeug 100 zu erfassen. Alternativ kann auch eine Reflexion des Lichtes von der baulichen Trennung 270 auf die Fahrbahn in einem Bereich 210 vor dem Fahrzeug 100 ermittelt werden und mit einer gespeicherten (d.h. erwarteten) Helligkeit bei einem Fehlen der baulichen Trennung 127 verglichen werden. Auf diese Weise kann die Position des Objektes 127 indirekt über die Reflexionseigenschaft des Objektes 127 und die hierdurch bewirkte Helligkeitserhöhung in der unmittelbaren Umgebung des Objektes 127 erkannt werden.

Erhabene Objekte 127 wie Leitplanken oder Betonwände (oder allgemein seitlichen Begrenzungen) lassen sich auf diese Weise erkennen, da auf diese bauliche Trennung Licht fallen kann, das gegebenenfalls nicht oder nur sehr weit weg auf dem Boden auftreffen würde.

Wird über die geschätzte Entfernung der Lichtreflexion eine bauliche Trennung erkannt, kann die Funktion "Autobahnlicht" eingeschaltet werden und/oder andere Parameter zur Entprellstrategie angepasst werden (z.B. können deutlich längere Entprellzeiten wegen schlecht erkennbaren Fahrzeugen eingestellt werden).

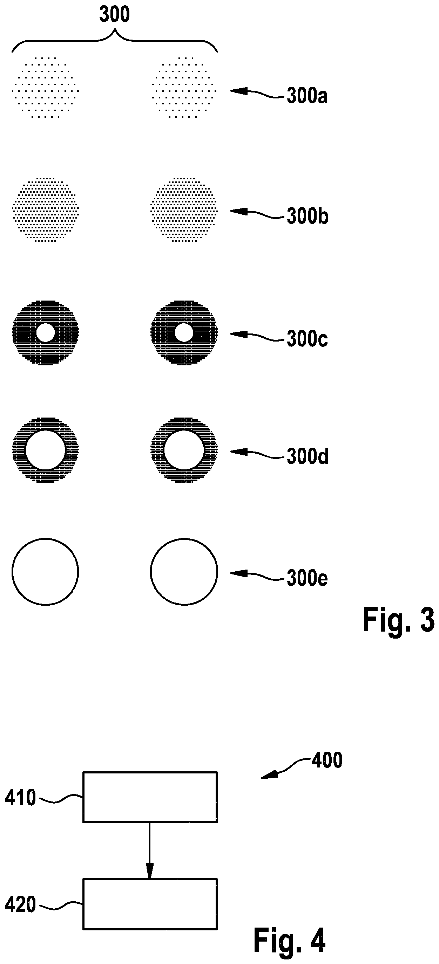

Alternativ oder zusätzlich kann auch eine Nutzung der Helligkeit und/oder Schärfe der Abbildung von Scheinwerferlicht (auch als "hot spots" bezeichnet, was besonders den hellsten Bereich des Scheinwerfers auf einem senkrecht stehenden Messschirm beschreibt) erfolgen. Bei Längsführung eines Fahrzeugs 100 oder auch bei der Bestimmung einer Entfernung eines Objektes 127 kann zusätzlich zur Helligkeit der angestrahlten Objekte genutzt werden, dass die Lichtverteilung im Bereich der optischen Achse am hellsten ist (was auch als "hot spot"-Effekt bezeichnet wird). Diese "Hot Spots" werden immer schärfer auf einem Objekt (z.B. eine Wand in einem Kamerabild) abgebildet, je näher das Objekt zur Betrachtungsebene kommt. Die Fig. 3 zeigt mehrere Darstellungen von solchen helleren Bereichen in unterschiedlichen Entfernungen, wobei diese helleren Bereiche durch Reflexion von Licht eines Scheinwerfers des Fahrzeugs 100 auf einem Objekt 127 entstehen. Die obere Darstellung 300a zeigt ein Scheinwerferpaar 400, das eine Reflexion von Licht des Fahrzeugscheinwerfers von einem weit entfernten Objekt 127 repräsentiert, wobei die Schärfe sehr gering ist. Als Schärfe kann dabei eine Größe (oder Breite) oder Struktur eines Übergangsbereichs zwischen einer hellen (durch die Scheinwerfer des Fahrzeugs angestrahlten) Region und einer dunklen Region des Bildes bezeichnet werden, wobei die Schärfe umso größer ist, je kleiner dieser Übergangsbereich ist. Die unter der oberen Darstellung 300a aus Fig. 3 gezeigten Abbildungen 300b bis 300e des Scheinwerferpaares 300 zeigen die zunehmende Schärfe der Abbildung des Scheinwerferpaares bei einer Annäherung des Scheinwerferpaares an den Betrachter bzw. eine Kamera, die das Scheinwerferpaar 300 aufnimmt. Entsprechen der Darstellung aus Fig. 3 werden somit die "Hot Spots" unterschiedlich scharf abgebildet - abhängig von der Entfernung zum Beobachter.

Durch Auswertung der Schärfe der Abbildung und/oder der Helligkeit der "Hot Spots" kann auf die Entfernung der angestrahlten erhabenen Objekte geschlossen werden und der Fahrer bei Bedarf gewarnt werden, beispielsweise im Zusammenhang mit einer einfachen Einparkhilfe nach vorne, oder zur Unterstützung einer (teil-) automatischen Einparkhilfe oder einem Ziel-Abbremsen bis in den Stillstand bei beispielsweise (Video-)ACC (ACC = automatischer Abstandshalter) oder die Entfernung zur Bestimmung des lateralen Abstandes eines Entgegenkommenden Fahrzeugs eingesetzt werden. Durch ein Verschwenken von einem oder mehreren Scheinwerfern, wie es bei einem Kurvenlicht-System üblich ist, kann die Position der "Hot-Spots" verändert werden, was sich günstig auf die Erkennungsleistung auswirkt. Das Verschwenken wird dabei zur Unterstützung für den Schritt des Erkennens durchgeführt, es handelt sich vorzugsweise nicht um hierbei nicht um eine Funktion, um die Lichtverteilung für den Fahrer anzupassen. Das Verschwenken kann somit als von einer Ausführungsvariante des Schritts des Anpassens der Lichtverteilung nach einer erkannten baulichen Trennung unterschiedlich verstanden werden. Insbesondere kann das Verschwenken als zum Schritt des Erkennens verstanden werden, so dass das Verschwenken nicht abhängig ist vom Vorhandensein einer (erkannten) baulichen Trennung. Hierdurch kann dann wiederum sehr einfach auf das Vorhandensein einer baulichen Trennung zwischen zwei Fahrspuren geschlossen werden. Neben festen angenommenen Reflexionseigenschaften der baulichen Trennung kann ebenso modellbasiert die Reflexionseigenschaft der baulichen Trennung geschätzt werden, insbesondere wenn sich der Abstand zu dem erhabenen Objekt (Wand, bauliche Trennung) ändert.

Die Änderung der Lichtverteilung, insbesondere das Verschwenken von zumindest einem Scheinwerfer kann genutzt werden, um die "Hot Spots" an eine Position zu bringen, die für das Ermitteln der Entfernung günstiger ist. So kann insbesondere auch bei seitlicher baulicher Infrastrukturmaßnahme, wie beispielsweise einer baulicher Trennung, der "Hot Spot" von zumindest einem Scheinwerfer auf die Infrastrukturmaßnahme projiziert werden. An Hand der Schärfe der Abbildung des Hot Spots kann dann wiederum der Abstand zur Reflexion bzw. der baulichen Infrastrukturmaßnahme ermittelt werden.

Das Ändern der Lichtverteilung, insbesondere dem Schwenken von zumindest einem Scheinwerfer verursacht eine Änderung der Lichthelligkeit in einer Richtung zum Fahrzeug. Mit der Änderung der Lichthelligkeit verändert sich proportional dazu die Menge des reflektierten Lichts. Ausschlaggebend für die Helligkeitsänderung ist die Größe des Reflexionsgrades, der angibt, wie groß der Anteil des reflektierten Lichts ist. Das photometrische Entfernungsgesetzt beschreibt die quadratische Abhängigkeit der Lichtmenge von der Entfernung. Durch Vergleich der reflektierten Lichtmenge vor und nach Änderung der Lichtverteilung kann das Ermitteln des Abstandes, sowie die Genauigkeit bei der Schätzung des Reflexionsgrades, verbessert werden.

Eine Erhöhung des reflektierten Lichts durch eine Änderung der Lichtverteilung, beispielsweise durch Schwenken von zumindest einem Scheinwerfer, wirkt sich positiv auf das Ermitteln des Abstandes aus, da durch die größere Menge an reflektiertem Licht der Einfluss der Messungenauigkeit verringert werden kann.

Durch die Veränderung der Lichtverteilung, insbesondere dem Verschwenken von zumindest einem Scheinwerfer kann der Abstand genauer ermittelt werden, wodurch der Fahrer insgesamt besser unterstützt werden kann.

Ferner kann auch eine mögliche Erweiterung durch Auswerten des Bildes einer Rückfahr-Kamera an einer homogenen Wand über die Rückstrahlcharaketeristik der Bremsleuchten oder nur einer der Bremsleuchten (z.B. der dritten Bremsleuchte) erfolgen, um einen Abstand zu messen.

Fig. 4 zeigt ein Ablaufdiagramm eines Ausführungsbeispiels der vorliegenden Erfindung als Verfahren 400 zur Ermittlung des Vorhandenseins einer baulichen Trennung zwischen zwei Fahrbahnen. Das Verfahren weist einen Schritt des Einlesens 410 eines Lichtsignals von einem optischen Sensor, wobei das Lichtsignal eine Helligkeit, das einen Grad einer Reflexion von Licht, das von einem Scheinwerfer des Fahrzeugs ausgestrahlt wurde von einem Objekt und/oder das eine Schärfe einer Begrenzungslinie des Lichts aus dem Scheinwerfer auf dem angestrahlten Objektes repräsentiert. Ferner umfasst das Verfahren einen Schritt des Bestimmens 420 eines Abstandes des Objektes von dem Fahrzeug unter Verwendung des Lichtsignals, um die Position des Objektes in dem Umfeld des Fahrzeugs zu bestimmen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zur Ermittlung einer Position eines Objektes (127) in einem Umfeld (120) eines Fahrzeugs (100), wobei das Verfahren (400) die folgenden Schritte umfasst:
- Einlesen (410) eines Lichtsignals von einem optischen Sensor (110), wobei das Lichtsignal
∘ eine Helligkeit und einen Grad einer Reflexion von Licht, das von einem Scheinwerfer (140) des Fahrzeugs (100) ausgestrahlt wurde, von einem Objekt und/oder
∘ eine Helligkeit und eine Schärfe einer Begrenzungslinie des vom Licht aus dem Scheinwerfer (120) angestrahlten Objektes (127) repräsentiert; und
- Bestimmen (420) eines Abstandes (128) des Objektes (127) von dem Fahrzeug (100) unter Verwendung des Lichtsignals, um die Position des Objektes (127) in dem Umfeld (120) des Fahrzeugs (100) zu bestimmen.

2. Verfahren (400) gemäß Anspruch 1, **dadurch gekennzeichnet, dass** im Schritt des Einlesens (410) ferner ein Winkel (129) eingelesen wird, unter dem das Lichtsignal in Bezug zu einer Ausrichtung des Fahrzeugs (100) erfasst wurde, wobei im Schritt des Bestimmens (420) die Position des Objektes (127) ferner unter Verwendung des Winkels (129) bestimmt wird.

3. Verfahren (400) gemäß einem der vorangegangenen Ansprüche, **dadurch gekennzeichnet, dass** im Schritt des Einlesens (410) zumindest ein weiteres Lichtsignal von dem optischen Sensor (110) eingelesen wird, das eine Helligkeit, einen Grad einer Reflexion von Licht repräsentiert, wobei das weitere Lichtsignal eine Helligkeit, einen Grad einer Reflexion von Licht, das von dem Scheinwerfer des Fahrzeugs ausgestrahlt wurde von dem Objekt oder eine Schärfe einer Begrenzungslinie des von Licht aus dem Scheinwerfer des Fahrzeugs angestrahlten Objektes repräsentiert, wobei das Lichtsignal von einer anderen Stelle des Objektes (127) erfasst wird, als das Lichtsignal und wobei im Schritt des Bestimmens (420) eine räumliche Abbildung des Objektes (127) unter Verwendung des Lichtsignals und des weiteren Lichtsignals bestimmt wird.

4. Verfahren (400) gemäß einem der vorangegangenen Ansprüche, **gekennzeichnet durch** einen Schritt des Erkennens einer baulichen Infrastrukturmaßnahme (127), wenn ein Bereich in Fahrtrichtung (122) vor dem Fahrzeug (100) eine größere Helligkeit aufweist, als es ohne das Vorhandensein der baulichen Infrastrukturmaßnahme (127) zu erwarten wäre.

5. Verfahren (400) gemäß Anspruch 4, **dadurch gekennzeichnet, dass** im Schritt des Erkennens die bauliche Infrastrukturmaßnahme (127) dann erkannt wird, wenn der Abstand (128) zu dem Objekt (127, 210) im Schritt des Bestimmens (420) kleiner als ein vorbestimmter Sicherheitsabstand bestimmt wird.

6. Verfahren (400) gemäß Anspruch 4 oder 5, **dadurch gekennzeichnet, dass** im Schritt des Erkennens die bauliche Infrastrukturmaßnahme auf derjenigen Seite des Fahrzeugs (100) angeordnet erkannt wird, auf der der Bereich mit der größer als erwarteten Helligkeit erkannt wurde.

7. Verfahren (400) gemäß einem der Ansprüche 4 bis 6, **gekennzeichnet durch** einen Schritt des Anpassens einer Lichtausstrahlung von Licht des Scheinwerfers (140) des Fahrzeugs (100) und/oder eines Lichtausstrahlungsparameters zur Lichtausstrahlung von Licht des Scheinwerfers (140) des Fahrzeugs (100), wenn im Schritt des Erkennens die bauliche Infrastrukturmaßnahme (127) erkannt wurde.

8. Verfahren (400) gemäß einem der vorangegangenen Ansprüche, **dadurch gekennzeichnet, dass** vor dem Schritt des Einlesens (410) ein Schritt des Ansteuerns einer Bewegung zumindest eines Scheinwerfers (140) ausgeführt wird, wobei das Ansteuern derart erfolgt, dass eine Lichtausstrahlung von Licht des Scheinwerfers (140) des Fahrzeugs (100) und/oder eines Lichtausstrahlungsparameters zur Lichtausstrahlung von Licht des Scheinwerfers (140) des Fahrzeugs (100) derart erfolgt, dass die Lichtausstrahlung in einer im Wesentlichen quer zur Fahrtrichtung des Fahrzeugs gerichteten Richtung geschwenkt wird.

9. Verfahren (400) gemäß einem der vorangegangenen Ansprüche, **gekennzeichnet, durch** einen Schritt des Ausgebens eines Warnsignals, wenn der bestimmte Abstand (128) kleiner als ein Warnabstand ist.

10. Verfahren (400) gemäß einem der vorangegangenen Ansprüche, **gekennzeichnet, durch** einen Schritt des Eingreifens eines Fahrerassistenzsystems in eine Steuerung des Fahrzeugs ansprechend auf den bestimmten Abstand (128) des Objektes (127) von dem Fahrzeug (100), wobei insbesondere ein Eingreifen eines Spurhalteassistenten, ein Assistenzsystem zur Einhaltung eines Abstandes zu einem vorausfahrenden Fahrzeug, ein Assistenzsystem zur Überwachung einer seitlichen Annäherung an eine Begrenzung, ein oder ein Bremsassistenzsystem und/oder ein Einparkhilfesystem als Fahrerassistenzsystem ansprechend auf den bestimmten Abstand des Objektes (128) zu dem Fahrzeug (100) erfolgt.

11. Vorrichtung (125), die ausgebildet ist, um die Schritte eines Verfahrens (400) gemäß einem der Ansprüche 1 bis 10 durchzuführen.

12. Computer-Programmprodukt mit Programmcode zur Durchführung des Verfahrens (400) nach einem der Ansprüche 1 bis 10, wenn das Programm auf einer Vorrichtung (125) ausgeführt wird.

## Claims

1. Method (400) for ascertaining a position of an object (127) in the surroundings (120) of a vehicle (100), wherein the method (400) comprises the following steps:
- reading in (410) of a light signal by an optical sensor (110), wherein the light signal
∘ represents a brightness and a degree of reflection of light which has been emitted by a headlamp (140) of the vehicle (100), of an object and/or
∘ a brightness and a sharpness of a boundary line of the object (127) which is illuminated by the light from the headlamp (120); and
- determining (420) a distance (128) of the object (127) from the vehicle (100) using the light signal, in order to determine the position of the object (127) in the surroundings (120) of the vehicle (100).

2. Method (400) according to Claim 1, **characterized in that** in the reading-in step (410), in addition, an angle (129) at which the light signal was detected with respect to an orientation of the vehicle (100) is read in, wherein in the determining step (420) the position of the object (127) is also determined using the angle (129) .

3. Method (400) according to one of the preceding claims, **characterized in that** in the reading-in step (410) at least one further light signal is read in by the optical sensor (110) which represents a brightness, a degree of reflection of light, wherein the further light signal represents a brightness, a degree of reflection of light which has been emitted by the headlamp of the vehicle, of the object or a sharpness of a boundary line of the object illuminated by light from the headlamp of the vehicle, wherein the light signal from another location on the object (127) is recorded as the light signal, and wherein in the determining step (420) a spatial depiction of the object (127) is determined using the light signal and the further light signal.

4. Method (400) according to one of the preceding claims, **characterized by** a step of detecting a structural infrastructure measure (127) if a region in the direction of travel (122) in front of the vehicle (100) has a higher level of brightness than would be expected without the presence of the structural infrastructure measure (127).

5. Method (400) according to Claim 4, **characterized in that** in the detection step the structural infrastructure measure (127) is detected when the distance (128) from the object (127, 210) in the determining step (420) is determined as being shorter than a predetermined safety distance.

6. Method (400) according to Claim 4 or 5, **characterized in that** in the detection step the structural infrastructure measure is detected as being arranged on that side of the vehicle (100) on which the region with the higher than expected brightness was detected.

7. Method (400) according to one of Claims 4 to 6, **characterized by** a step of adapting a light emission of light of the headlamp (140) of the vehicle (100) and/or of a light emission parameter relating to the light emission of light of the headlamp (140) of the vehicle (100) if the structural infrastructure measure (127) has been detected in the detection step.

8. Method (400) according to one of the preceding claims, **characterized in that** before the reading-in step (410) a step of actuating a movement of at least one headlamp (140) is executed, wherein the actuation takes place in such a way that a light emission of light of the headlamp (140) of the vehicle (100) and/or of a light emission parameter relating to the light emission of light of the headlamp (140) of the vehicle (100) takes place in such a way that the light emission is pivoted in a direction essentially perpendicular to the direction of travel of the vehicle.

9. Method (400) according to one of the preceding claims, **characterized by** a step of outputting a warning signal if the determined distance (128) is less than a warning distance.

10. Method (400) according to one of the preceding claims, **characterized by** a step of intervention by a driver assistance system in a controller of the vehicle in response to the determined distance (128) of the object (127) from the vehicle (100), wherein, in particular, intervention of a lane keeping assistant, an assistance system for maintaining a distance from a vehicle travelling ahead, an assistance system for monitoring lateral approaching of a boundary, or a brake assistance system and/or a parking aid system as a driver assistance system occurs in response to the determined distance of the object (128) from the vehicle (100).

11. Device (125) which is designed to carry out the steps of a method (400) according to one of Claims 1 to 10.

12. Computer program product with program code for carrying out the method (400) according to one of Claims 1 to 10 when the program is executed on a device (125) .

## Revendications

1. Procédé (400) pour déterminer une position d'un objet (127) dans un environnement (120) d'un véhicule (100), le procédé (400) comprenant les étapes suivantes :
- acquisition (410) d'un signal lumineux d'un capteur optique (110), le signal lumineux représentant
∘ une luminosité et un degré d'une réflexion par un objet de la lumière qui a été émise par un phare (140) du véhicule (100) et/ou
∘ une luminosité et une netteté d'une ligne de délimitation de l'objet (127) illuminé par la lumière issue du phare (120) ; et
- détermination (420) d'une distance (128) entre l'objet (127) et le véhicule (100) en utilisant le signal lumineux afin de déterminer la position de l'objet (127) dans l'environnement (120) du véhicule (100).

2. Procédé (400) selon la revendication 1, **caractérisé en ce que** l'étape d'acquisition (410) comprend en plus l'acquisition d'un angle (129) sous lequel a été détecté le signal lumineux en référence à une orientation du véhicule (100), la position de l'objet (127) dans l'étape de détermination (420) étant en plus déterminée en utilisant l'angle (129).

3. Procédé (400) selon l'une des revendications précédentes, **caractérisé en ce que** dans l'étape d'acquisition (410), au moins un signal lumineux supplémentaire est acquis par le capteur optique (110), lequel représente une luminosité, un degré d'une réflexion de la lumière, le signal lumineux supplémentaire représentant une luminosité, un degré d'une réflexion par l'objet de la lumière qui a été émise par le phare du véhicule ou une netteté d'une ligne de délimitation de l'objet illuminé par la lumière issue du phare du véhicule, le signal lumineux étant détecté depuis un côté de l'objet (127) différent de celui du signal lumineux et une représentation dans l'espace de l'objet (127) étant déterminée dans l'étape de détermination (420) en utilisant le signal lumineux et le signal lumineux supplémentaire.

4. Procédé (400) selon l'une des revendications précédentes, **caractérisé par** une étape de reconnaissance d'une mesure d'infrastructure constructive (127) lorsqu'une zone dans le sens de déplacement (122) devant le véhicule (100) présente une luminosité plus élevée que celle qui serait attendue sans la présence de la mesure d'infrastructure constructive (127).

5. Procédé (400) selon la revendication 4, **caractérisé en ce que** dans l'étape de reconnaissance, la mesure d'infrastructure constructive (127) est reconnue lorsque la distance (128) de l'objet (127, 210) dans l'étape de détermination (420) est déterminée comme étant inférieure à une distance de sécurité prédéterminée.

6. Procédé (400) selon la revendication 4 ou 5, **caractérisé en ce que** dans l'étape de reconnaissance, la mesure d'infrastructure constructive est reconnue comme étant disposée du côté du véhicule (100) sur lequel a été reconnue la zone ayant la luminosité supérieure à celle attendue.

7. Procédé (400) selon l'une des revendications 4 à 6, **caractérisé par** une étape d'adaptation d'un rayonnement lumineux de la lumière du phare (140) du véhicule (100) et/ou d'un paramètre de rayonnement lumineux relatif au rayonnement lumineux de la lumière du phare (140) du véhicule (100) lorsque la mesure d'infrastructure constructive (127) a été reconnue dans l'étape de reconnaissance.

8. Procédé (400) selon l'une des revendications précédentes, **caractérisé en ce qu'**une étape de commande d'un mouvement d'au moins un phare (140) est exécutée avant l'étape d'acquisition (410), la commande étant effectuée de telle sorte qu'un rayonnement lumineux de la lumière du phare (140) du véhicule (100) et/ou un paramètre de rayonnement lumineux relatif au rayonnement lumineux de la lumière du phare (140) du véhicule (100) est effectué de telle sorte que le rayonnement lumineux est pivoté dans une direction qui est orientée sensiblement transversalement au sens de déplacement du véhicule.

9. Procédé (400) selon l'une des revendications précédentes, **caractérisé par** une étape de délivrance d'un signal d'alerte lorsque la distance (128) déterminée est inférieure à une distance d'alerte.

10. Procédé (400) selon l'une des revendications précédentes, **caractérisé par** une étape d'intervention d'un système d'assistance au conducteur dans une commande du véhicule en réaction à la distance (128) déterminée de l'objet (127) par rapport au véhicule (100), une intervention d'un système d'alerte de franchissement involontaire de ligne, un système d'assistance servant au maintien d'une distance par rapport à un véhicule qui précède, un système d'assistance servant à la surveillance d'une approche latérale d'une délimitation, un ou un système d'assistance au freinage et/ou un système d'aide à l'entrée en stationnement en tant que système d'assistance au conducteur étant notamment effectuée en réaction à la distance déterminée de l'objet (128) par rapport au véhicule (100).

11. Dispositif (125) qui est configuré pour exécuter les étapes d'un procédé (400) selon l'une des revendications 1 à 10.

12. Produit de programme informatique comprenant un code de programme destiné à mettre en oeuvre le procédé (400) selon l'une des revendications 1 à 10 lorsque le programme est exécuté sur un dispositif (125).
